(19) Europäisches Patentamt
European Patent Office
Office européen des brevets

(11) **EP 4 369 257 A1**

(12) **EUROPEAN PATENT APPLICATION**

(43) Date of publication:
**15.05.2024 Bulletin 2024/20**

(51) International Patent Classification (IPC):
**G06N 3/08** *(2023.01)*    **G06N 20/00** *(2019.01)*

(21) Application number: **23209550.5**

(22) Date of filing: **13.11.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022  PT 2022118329**

(71) Applicant: **Feedzai - Consultadoria e Inovação Tecnológica, S.A.**
**3030-199 Coimbra (PT)**

(72) Inventors:
- **PEREIRA ROSA CORREIA POMBAL, JOSÉ MARIA**
**3030-199 COIMBRA (PT)**
- **DOS SANTOS SALEIRO, PEDRO**
**3030-199 COIMBRA (PT)**
- **SANTOS RODRIGUES BIZARRO, PEDRO GUSTAVO**
**3030-199 COIMBRA (PT)**

(74) Representative: **Patentree**
**Edificio Net**
**Rua de Salazares, 842**
**4149-002 Porto (PT)**

(54) **METHOD AND SYSTEM FOR FAIRNESS-AWARE DATA VALUATION PROCESSING FOR SUPERVISED LEARNING**

(57)     The present document discloses a method for machine-learning fairness-aware data valuation processing for supervised learning, from a training dataset comprising a plurality of data records each containing data for a training instance for said supervised learning, wherein the data for each training instance comprises one or more target variables, one or more input variables and one or more protected-attribute variables, wherein fairness is defined as minimizing a data bias present in the training set in respect of the one or more protected variables.

Fig. 1

**EP 4 369 257 A1**

## Description

### TECHNICAL FIELD

The present disclosure relates to a method and system for fairness-aware data valuation processing for supervised learning, in particular for reweighted machine-learning.

### BACKGROUND

The field of data valuation can assess the value of training instances toward a certain predictive task, and determine how such instances influence both performance and impartiality of machine learning (ML) models. Data valuation techniques, such as for data preprocessing or active learning, that are not performance and fairness-aware, can run the risk of propagating and exacerbating bias, including as embedded within the data. Such a risk has materialized in recent years, with the rapid adoption of ML methods and systems in high-stakes decision-making settings, which has led to numerous works identifying how such methods can discriminate against certain groups, thereby giving rise to the field of fair ML.

Key factors of machine learning include the data used to train models and specific instances, which have been shown to play a crucial part in the performance of ML models [31, 39, 45]. Depending on a respective metric of interest, certain training data instances may have a greater or lesser degree of value. Accordingly, the field of data valuation has arisen, with the goal of associating each training datum with a corresponding value. Various data valuation approaches can be applied [12, 13, 24, 38, 44], such as noisy labels detection, and active learning, each with a varying degree of success [13, 14, 24, 44]. While data valuation has been used with respect to fairness metrics, none has with a goal of performance and fairness.

On supervised learning, where data valuation is usually framed in the following way [12-14, 23, 44]: given a set of training data with n data instances, each characterized by a feature vector $x_i$ (in which one, or more, protected attribute(s) $z_i$ may be included), and a target variable $y_i$, the goal is to find the value $v_i$ of each training instance, with respect to some value metric of interest $V$, obtained by a learning algorithm $f$ trained to predict $y_i$ from $x_i$. How $v_i$ is calculated varies from work to work. Ghorbani and Zou [13] take a game-theoretical approach and calculate the Shapley value of each data instance. For some instance $i$, this is done through training a model on all possible coalitions of training instances with and without instance $i$, computing $V$ for each, and returning the difference between the average $V$ in coalitions where i is present, and the average $V$ in the rest of the coalitions. Although this method enjoys a series of desirable properties, it is intractable to compute, and approximations have been proposed by the original authors, and in other works [12, 23, 24]. Conversely, Yoon et al. [44] take a reinforcement learning approach, where a data valuator model is jointly trained with the predictor of the task from which $V$ is calculated.

As for the metric of interest, Ghorbani and Zou [13] and Yoon et al. [44] set V as the accuracy of a predictor $f$ on unseen data (test set), with $v_i$ being the importance of data instance $i$ towards achieving the performance that predictor $f$ obtains when trained on the whole dataset. However, $V$ can be any metric of interest; Karlaš et al. [23], for example, aside from the usual performance metric-based data valuation, perform data valuation with equalized odds difference as $V$. A glaring gap in the literature is that no work defines $V$ as a combination of performance and fairness. These components, if fairness is mentioned, are always shown separately. One of the main goals of fair ML is rather to maximize both predictive performance and fairness at the same time. Furthermore, besides some applications in active learning and noisy instance detection, data valuation has never been used for fairness-promoting interventions-except indirectly by Li and Liu [26].

But along with their exceptional performance in some tasks, ML algorithms have been shown to have the potential to exacerbate and propagate biases embedded within data [1, 21, 32]. This is especially true if such models are trained with regards only to some performance metric, and if they are treated as unamenable black boxes.

Such a stance is particularly problematic in high-stakes decision making domains, where biased policies may result in certain social groups being systematically discriminated, and locked out of important goods and services (e.g., by race, sex). This phenomenon has sparked the creation of the field of fair ML, which has grown rapidly in recent years [3, 28, 34].

Just as data plays a part in the performance of models, so does it play a part in their potential for discrimination [4, 5, 40, 41]. Indeed, data bias can shape the landscape of fairness and performance [35, 36], but little work has been made to understand the sources of these biases.

These facts are disclosed in order to illustrate the technical problem addressed by the present disclosure.

### GENERAL DESCRIPTION

The present document discloses a computer-implemented fairness-aware data valuation (FADV), a data valuation framework, i.e., for measuring which ML training instances contribute the most to both performance and fairness of models. The framework can be used to incorporate fairness concerns into a series of ML applications (e.g., exploratory data analysis, data pre-processing).

It is introduced a method and metric to relate data bias to specific data instances. Such a tool furthers a data-centric understanding of unfairness, and respond to gaps in the current literature, from both exploratory data analysis (EDA), unfairness mitigation, and active learning perspectives.

This method can be applied with any type of classification or regression task, as well with any number of categorical and continuous protected attributes.

In the context of the method, it is further introduced an entropy-based notion of value and utility, which incorporates both performance and (procedural) fairness (data bias) concerns. To validate the method and the proposed metric, it is showed how they could be applied in the context of an unfairness mitigation pre-processing intervention in binary classification setting (training set sampling and reweighing). Recently, Xu et al. [42] proposed using entropy as a measure of data value for online ML tasks (with respect only to performance). Other metrics, such as data Shapley, are not suitable for these settings, as they require a fixed dataset.

A concise benchmark on the fraud detection dataset showed how the method compares favourably to existing ones in the literature, in terms of achieving promising fairness-accuracy trade-offs. Furthermore, the resulting value vector for the training set adds another possible dimension for fairness-aware exploratory data analysis and to incorporate fairness concerns into other actions in the ML pipeline, such as data collection, data generation, etc.

From an EDA perspective, the instances' valuation vector relates to the data features, since these two components are inherently connected to each other - one is meaningless without the other.

In an embodiment, given a valuation vector (V), a surrogate model for the distribution $P[V|X,Y,Z]$ is trained, and a feature importance method is applied on it. For example, SHAP would provide a landscape of local feature importances and directly link the contribution of individual features to the value of each instance on a specific predictive task.

Tracing data bias to specific training instances is a useful practice to further the understanding of algorithmic unfairness and to add another layer of insight to data exploration and other tasks along the ML pipeline, at least in the realm of supervised learning.

A method for fairness-aware data valuation processing that is based on a notion of utility that incorporates the value of specific instances towards both performance and fairness (lack of data bias). It can be used with continuous and categorical targets and protected attributes, as well as to promote subgroup fairness.

It is also disclosed, an entropy-based notion of data value, which can be used in any predictive task, and therefore used to calculate an instance's value towards accurate prediction of a target Y, and data bias with respect to one or more protected attributes.

The present document discloses a method for machine-learning fairness-aware data valuation processing for supervised learning, from a training dataset comprising a plurality of data records each containing data for a training instance (i) for said supervised learning, wherein the data for each training instance comprises one or more target variables (Y), one or more input variables (X) and one or more protected-attribute variables (Z), wherein fairness is defined as minimizing a data bias present in the training set in respect of the one or more protected variables (Z), the method comprising the steps of: for each target variable of the one or more target variables (Y), use the training dataset for training a machine-learning model with the one or more input variables (X) as model inputs and said each target variable (Y) as model output, for each protected-attribute variable of the one or more protected-attribute variables (Z), use the training dataset for training a machine-learning model with the one or more input variables (X) as model inputs and said each protected-attribute variable (Z) as model output; obtaining a prediction of each target variable (Y) and a prediction for each protected-attribute variable (Z), for each instance of the training dataset; obtaining a performance entropy from the predictions of each said target variable (Y) and a protected-attribute entropy from the predictions of each said protected-attribute variable (Z); and outputting the performance entropy and the protected-attribute entropy.

In an embodiment, the method further comprising the preparatory step of: splitting the training instances of the training dataset into a plurality of sets, each set comprising a first subset of training instances and second subset of training instances, such that each training instance is present in at least one of a second subset of said plurality of sets; the method further comprising, when training said machine-learning models and obtaining said prediction, the steps of: for each set, and for each target variable of the one or more target variables (Y), use the first subset of said each set for training a machine-learning model with the one or more input variables (X) as model inputs and said each target variable (Y) as model output; for each set, and for each protected-attribute variable of the one or more protected-attribute variables (Z), use the first subset of said each set for training a machine-learning model with the one or more input variables (X) as model inputs and said each protected-attribute variable (Z) as model output; obtaining a prediction of each target variable (Y) and a prediction for each protected-attribute variable (Z), for each instance of the second subsets.

In an embodiment, the method comprising, using the one or more protected-attribute variables (Z) as model inputs when training the machine-learning model with the one or more input variables (X) as model inputs and said each target variable (Y) as model output.

In an embodiment, the method comprising, using the one or more target variables (Y) as model inputs when training the machine-learning model with the one or more input variables (X) as model inputs and said each protected-attribute variable (Z) as model output.

In an embodiment, said splitting is random and repeated until each training instance is present in at least one of second subsets, preferably wherein each training instance is randomly allocated to one of the second subsets.

In an embodiment, said splitting is overlapping between second subsets such that each training instance is present in one or more second subsets of the plurality of sets.

In an embodiment, the method comprising, after splitting and before training, sampling, for each set, without replacement within each set, with replacement across sets, training instances for subsequent training.

In an embodiment, the method further comprising a step of obtaining a central value statistic from the obtained entropy over the trained models and over the second subsets of said each set; and outputting the obtained central value statistic as an instance weighing for supervised training.

In an embodiment, the obtaining of the central value statistic comprises obtaining an average of obtained entropy over the trained models and over the second subsets of each said set.

In an embodiment, the method further comprising a step of: obtaining a utility metric, for each training instance, as a combination of the obtained performance entropy or entropies and of the obtained protected-attribute entropy or entropies.

In an embodiment, Method according to the previous claim wherein the utility metric, is a utility vector obtained,

$$U_i = \alpha v_{y_i} + \sum_{j=1}^{k} \beta_j v_{z_{j_i}}$$

for each instance, via a linear scalarization defined as: wherein $U_i$ is the utility metric for instance $i$, $\alpha$ and $\beta_j$ are weighing factors comprised between 0 and 1, $v_{y_i}$ is a performance entropy in respect of target variable (Y) for instance $i$, $v_{z_{j_i}}$ is a protected-attribute entropy in respect of protected variable $z_j$ for instance i, wherein the one or more protected attribute variables (Z) comprise k protected attribute variables ($Z_{j=1...k}$); preferably wherein the one or more protected attribute variables (Z) comprise two protected attribute variables ($Z_a$, $Z_b$), and wherein the

$$U_i = \alpha v_{y_i} + \beta v_{z_{a_i}} + \theta v_{z_{b_i}}$$

utility metric is defined as: , and $v_{z_{a_i}}$ is a protected-attribute entropy in respect of a first protected variable $z_a$ for instance i, and $v_{z_{b_i}}$ is a protected-attribute entropy in respect of a second protected variable $z_b$ for instance i, $\theta$ is a weighing factor comprised between 0 and 1; more preferably $U_i = \alpha v_{y_i} + (1 - \alpha)v_{z_i}$, wherein $v_{z_i}$ is a protected-attribute entropy in respect of protected variable (Z) for instance i.

In an embodiment, the utility metric, is a utility vector obtained, for each instance, via a multiplicative scalarization

$$U_i = v_{y_i}^{\alpha} \cdot v_{z_i}^{1-\alpha}$$

defined as: ; wherein $U_i$ is the utility metric for instance i, $\alpha$ is a weighing factor comprised between 0 and 1, $v_{y_i}$ is a performance entropy in respect of target variable (Y) for instance i, and $v_{z_i}$ is a protected-attribute entropy in respect of protected variable (Z) for instance i; wherein the one or more protected attribute variables (Z) comprise k subgroups of protected attribute variables ($Z_{j=1...k}$).

In an embodiment, the method comprising carrying out supervised learning using the obtained utility metric, for each training instance, as instance weighing.

It is further disclosed a computer program product embodied in a non-transitory computer-readable medium comprising computer program instructions, which when executed by a computer processor, cause the computer processor to carry out said method for machine-learning fairness-aware data valuation processing.

It is also disclosed a non-transitory storage media including program instructions for machine-learning fairness-aware data valuation processing, the program instructions including instructions executable to carry out said method.

Two embodiments of an algorithm to estimate the proposed metric for all instances in a training set are disclosed.

It is further disclosed an evaluation of how the method can be used for exploratory data analysis and fairness-aware training data sampling and re-weighing on a real world use-case. About the latter, it is presented empirical results that show that the general purpose method exhibits promising fairness-accuracy trade-offs, compared to existing methods in the literature designed specifically for the task at hand - a 25 p.p. improvement in fairness at 1 p.p. loss in performance, and in some circumstances up to 40 p.p..

## BRIEF DESCRIPTION OF THE DRAWINGS

The following figures provide preferred embodiments for illustrating the disclosure and should not be seen as limiting the scope of invention.

**Figure 1:** Flowchart representation of an embodiment of a method for machine-learning fairness-aware data valuation processing for supervised learning.

**Figure 2:** Graphical representation of the entropy of classifiers Y and Z of a fairness-aware data valuation matrix split by protected group for a given base dataset.

**Figure 3:** Graphical representation of the entropy of classifiers Y and Z of a fairness-aware data valuation matrix split by protected group for the Variant I dataset (unbiased).

**Figure 4:** Graphical representation of the entropy of classifiers Y and Z of a fairness-aware data valuation matrix split by protected group for the Variant II dataset (prevalence disparity bias).

**Figure 5:** Graphical representation of the entropy of classifiers Y and Z of a fairness-aware data valuation matrix split by protected group for the Variant III dataset (group-wise distinct class-conditional distribution bias).

**Figures 6A and 6B:** Graphical representations of predictive equality, demographic parity, and equality of opportunity in relation to performance for no data intervention, random prevalence sampling (RPS), reweighting (RW), utility-aware sampling (UAS), utility-aware prevalence sampling (UASP), and utility-aware reweighting (UAR).

## DETAILED DESCRIPTION

The present disclosure includes a method for fairness-aware data valuation (FADV), a data valuation processing that allows measuring which training instances contribute the most to both performance and fairness of models.

It is further disclosed an entropy-based data valuation metric that is specifically tailored to relate to model performance and data bias concerns. This method embodies the ultimate goal of fair ML, which is to incorporate fairness concerns into ML systems, while keeping their performance high. FADV can be used in the same ways as data valuation, and, as such, can be a vehicle to introduce fairness concerns into a series of upstream and downstream tasks, such as data pre-processing, active learning, data generation, and exploratory data analysis (EDA). It is shown the efficacy of FADV as a means to conduct unfairness mitigation pre-processing interventions, and to achieve better fairness in active learning.

This document focuses on data valuation for supervised learning, where a method that defines V as a function of both performance and data bias (fairness) and shows how it can be used to promote observational fairness, being an inherently data-centric task.

To be able to reason about the types of bias present in the data, and understand how fairness-aware data valuation works under distinct biases, the data bias taxonomy proposed by Pombal et al. [35] is leveraged. Herein the features of a dataset are referenced as X, the class label as Y, and the protected attribute as Z. The following definitions use the inequality sign ($\neq$) to mean a statistically significant difference, not a strict inequality.

Base Bias Condition: $\mathbb{P}[X, Y] \neq \mathbb{P}[X, Y|Z]$, to satisfy this, Z must be statistically related to either X, Y, or both. The following biases imply this condition.

Prevalence Disparities: $\mathbb{P}[Y] \neq \mathbb{P}[Y|Z]$, i.e., the class probability depends on the protected group.

Group-wise Class-conditional Distribution Bias: $\mathbb{P}[X|Y] \neq \mathbb{P}[X|Y, Z]$. This condition reads 'the distribution of the features conditioned on the target depends on the protected attribute'.

The last condition does not imply the Base bias condition, but can still be relevant for fairness: group size disparities. Let z be a particular group from a given protected attribute Z, and N the number of possible groups. Under group size disparities, one has:

$$\mathbb{P}\left[Z = z\right] \neq \frac{1}{N}.$$

As mentioned before, the key component of the method is the definition of V as a function of both performance and fairness, rather than having them be separate components. The goal is not only to accurately predict Y, but also to do it fairly.

Herein the metric of interest is referred as utility ($U$). This nomenclature is inspired by the economics literature, where the well-being (utility) of an individual is defined as a function of the utility derived from a weighted combination of factors (e.g., economic goods), rather than a single one. In this case, utility is a function of performance and fairness; how it is maximized depends on the definition of the function and on the weights attributed to performance and fairness. Thus, the utility of a single data instance can be written as $U_i(v_{yi}, v_{zi})$, where $v_{yi}$ is the performance-related valuation of instance i, and $v_{zi}$ is the fairness-related one.

The choice of v's and of how they interact is up to the practitioner, as these decisions are heavily task-dependent - it can be a Shapley value or any other measurement that is adequate (Sim et al. [38] have put forth a set of desiderata for data valuation metrics).

In an embodiment, the V metric is tied to the data bias taxonomy proposed by Pombal et al. [35]. This metric should not, however, be seen as the only metric that can be used within the method.

Two embodiments of utility functions are proposed a linear scalarization one: $U_i = \alpha v_{yi} + (1 - \alpha)v_{zi}$, where $\alpha \in$ [0, 1] governs the relative weight placed on performance and fairness, and a multiplicative scalarization one:

$$U_i = v_{y_i}^{\alpha} \cdot v_{z_i}^{1-\alpha}$$
, where $\alpha$ plays the same role as above.

Each of these utilities abide by the principles of the method, as they strike a balance between performance and fairness. However, they encode distinct preferences as far as this balance goes. For example, the multiplicative utility is zero if either valuation is zero, whereas the linear is not.

Thus, if a practitioner is not interested in gains in performance if they do not lead to some gains in fairness, they should opt for the multiplicative utility.

This method allows reasoning about and obtaining fairness-aware valuations for data instances, which can then be used for downstream tasks.

In an embodiment, the method is extended to applications concerned with subgroup fairness (fairness across a series of protected attributes and their combinations (for example, for protected attributes race and sex, one would be concerned with the fairness among $race_i/race_j$ and $sex_n/sex_m$, instead of just one attribute)); one needs only to include several Z terms in the utility function. For example, in a case where there are two protected attributes $Z_a$ and $Z_b$, a linear

$$U_i = \alpha v_{y_i} + \beta_a v_{z_{a_i}} + \beta_b v_{z_{b_i}}$$

utility function could be defined as: where the scalar terms govern the utility placed on performance, and the fairness of each group.

Alternatively, if both attributes are categorical, one could include a single Z term, where Z would be the label-set defined by the union between all the possible categories in each attribute (e.g., Z would have 4 labels, if each attribute had 2 groups).

In an embodiment, for k protected attributes, the utility function is defined as:

$$U_i = \alpha v_{y_i} + \sum_{j=1}^{k} \beta_j v_{z_{j_i}}.$$

The main challenge posed by the method is to define and calculate a $v_y$ for the predictive task at hand (e.g., detecting fraud), and $v_z$ for the fairness component of the utility. These could be, for example, the data Shapley value with respect to a validation set accuracy in the predictive task ($v_y$) and the Shapley value with respect to, for instance, a validation set equality of opportunity difference among protected groups in the same predictive task ($v_z$).

Such a choice would be appropriate within the method, but entails two difficulties: first, it limits the user to a specific fairness metric, which often implies sacrificing others; second, data Shapley values are intractably hard to compute, thus must be approximated.

In an embodiment, it is proposed a more metric-agnostic valuation, which is inspired by the literature on uncertainty estimation and active learning (for $v_y$), and on the data bias taxonomy proposed by Pombal et al. [35].

In an embodiment, for some data instance $i$, $v_{yi}$ is defined as the corresponding prediction Shannon entropy, averaged over the output of one or more trained models (In binary classification. for multi-class, the metric could be cross-entropy; for regression, the metric would have to be the difference from the sample mean, for example). In binary classification, the Shannon entropy (E) for uncertainty sampling for an instance i and prediction $\hat{y}_i$ is: $V_{yi} = E_{yi} = \hat{y}_i \cdot \log_2 \hat{y}_i + (1 - \hat{y}_i) \cdot \log_2(1 - \hat{y}_i)$ .

The rationale behind choosing the entropy without the target label is inspired by active learning, where there is abundant data outside the training set, but a small budget to label it, and thus it is vital to choose which instances to label. A popular method in active learning is uncertainty sampling [25, 37], where an ML model trained on data subsequently chooses to obtain labels for the observations on which it is most unsure (with the highest entropy). The idea is that the model learns more from adding these observations to the training set, than by adding observations on which the model is sure, as the training data already contains that information. This metric is not perfect, since being confident does not necessarily mean being right, and high entropy observations may simply be noisy and not necessarily useful. However, it is a useful valuation heuristic, which has been shown to work well in many settings, including fraud detection [2, 25, 27, 43]. This rationale is extended to data valuation and attribute the highest values to the instances with the highest entropy (the calculation of entropy is more involved than in active learning). In other words, it is attributed less value to instances where the model is very sure, since there is reason to believe that these encode redundant information.

As for $v_{zi}$, the metric is the same, but using a predictor of Z, rather than of Y. For an instance i, a binary protected attribute $z_i$, and predicted group $\hat{Z}_i$, one has:

$$V_{z_i} = E_{z_i} = \hat{z}_i \cdot \log_2 \hat{z}_i + (1 - \hat{z})_i \cdot \log_2(1 - \hat{z}_i)$$ .

A predictor of Z can be used to diagnose data bias, which is strongly related to downstream unfairness, yet not tied to a specific metric. Indeed, if that predictor were to pass an independence test among Z, X and Y - i.e., if it were no better than random at predicting Z using the rest of the data - then its predictions are expected to all have the same utility (or lack thereof) with respect to data bias, as they will all have the same entropy (or cross-entropy, if there are more than 2 groups, or, if the attribute is continuous, the MSE would be the same if the mean of Z were predicted for every instance. If there are two groups, with different sizes, entropy would not be maximal, but would be the same across all observations in a dataset). It would either be equal to 1, if group sizes are equal - for N protected groups, the model is expected to always predict $\frac{1}{N}$ - or to 0, if there is a majority group, as the model will predict that all observations belong to that group.

Conversely, if the model does not pass the independence test, then instances with lower entropy have features and a target variable that are more associated to Z, and thus contribute towards data bias if the model has access to them in some other predictive task (earning a lower valuation in this respect). Following this rationale, one would prefer instances with higher entropy in the task of estimating P[Z |X,Y] in order to minimize data bias. Notice that the metric is essentially the same for $v_y$ and $v_z$, but for different reasons. In the first case, one wants to prioritize observations on which the model had more difficulty during training, since these might contain less redundant information. In the second case, where the variable in question (Z) is not the target for the task at hand, and is seen by the model even at inference time, observations were prioritized where the model had more difficulty in establishing a relationship among X, Y, and Z, leveraging the fact the model has no explicit incentive to draw such relationships. This is directly related to mitigating the base bias condition of the taxonomy of Pombal et al. [35] (P[X,Y] ≠ P[X,Y |Z]), and so related to promoting fairness.

This metric can also be seen as a means to promote procedural fairness [15]: the model is told to pay less attention during training to the protected attribute, and whatever variables may be related with it.

The resulting combination of $v_y$ and $vz$ is a utility measure that balances both performance and fairness by assigning lower value to redundant information about Y and excessive information about Z in the data. Using a linear scalarization utility function, one would get: $U_i = \alpha E_{yi} + (1 - \alpha)E_{zi}$.

Again, this entropy-based metric can easily be extended to the case of subgroup fairness by building a predictor

$$: U_i = \alpha E_{y_i} + \sum_{j=1}^{k} \beta_j E_{z_{j_i}}$$ .

for all the protected attributes (categorical or continuous) of concern:

In an embodiment, the entropy is similar to that of Xu et al. [42], but it is extended to the context of data bias and fairness, and to offline ML tasks.

Computing the required entropy-based metric for v is not as straightforward as in active learning, since one objective is to obtain valuations for a fully-labeled training set, and for two variables (Y and Z).

In an embodiment, the method relies on creating bags from the training data of seen and unseen data, and training several models on each bag, from which entropy is obtained - akin to k-fold cross-validation. This is more closely related to active learning, since it involves a component of unseen data for which the model makes predictions.

Alternatively, in another embodiment, the method is arguably more straightforward as it does not involve sampling the training set, but is more a measure of epistemic uncertainty rather than a combination of epistemic and aleatoric uncertainty [20] (as is the case with the active learning case) (Loosely speaking, the latter pertains to uncertainty incorporated by the model, while the former pertains to uncertainty inherent to the data).

To obtain a measure of utility, one must run either algorithm with Y as the target (to calculate $v_y$) and with Z as the target (to obtain $v_z$), for the same training set, models, and bagging splits (if algorithm 1 is chosen). The final utility measure is then dependent on the chosen utility function, and its parameters.

This entropy-based valuation is best suited for a utility function to which both $v_y$ and $v_z$ contribute positively (e.g., the linear and multiplicative utilities shown previously). In terms of the desiderata for data valuation strategies put forth recently by Sim et al. [38], the entropy-based metric satisfies D1-D3, and D7 and D9 if the sum of the entropies of each observation is seen to be the value of the whole dataset.

---

**Algorithm 1** FADV Out-of-bag Entropy Algorithm

---

**Input:** training set $D$; variable of interest $var$; number of bags $n\_bags$; % of train in each unseen set in each bag $pct\_unseen$; models to train (pre-defined by user) $M$

**Output:** valuation vector with respect to $var$ $V$

1: $in\_bag\_sets$, $out\_of\_bag\_sets$ ← Split $D$ into $n\_bags$, each with $pct\_unseen$ of $D$ into an out-of-bag set, and the rest into an in-bag set ▷ Data is sampled without replacement within each bag, but with replacement across bags; each observation must appear in at least one set of out-of-bag data

2: $v\_list$ ← Empty list for intermediate target variable valuations

3: **for** in_bag, out_of_bag $\in$ [in_bag_sets, out_of_bag_sets] **do**

4:    **for** m $\in$ M **do**

5:       $fitted\_m$ ← Train $m$ on $in\_bag$ to predict $var$

6:       $v$ ← Vector of entropies of all predictions of $fitted\_m$ on $out\_of\_bag$

7:       $v\_list$ ← Append $v$

8:    **end for**

9: **end for**

10: $V$ ← Average entropies of each observation over all intermediate valuations in $v\_list$

---

Table I – Algorithm 1

---

**Algorithm 2** FADV In-bag Entropy Algorithm

---

**Input:** training set $D$; variable of interest $var$; models to train (pre-defined by user) $M$

**Output:** valuation vector with respect to $var$ $V$

1: **for** m $\in$ M **do**
2:     $fitted\_m \leftarrow$ Train $m$ on $D$ to predict $var$
3:     $v \leftarrow$ Vector of entropies of all predictions of $fitted\_m$ on $D$
4:     $v\_list \leftarrow$ Append $v$
5: **end for**
6: $V \leftarrow$ Average entropies of each observation over all intermediate valuations in $v\_list$

---

Table II – Algorithm 2

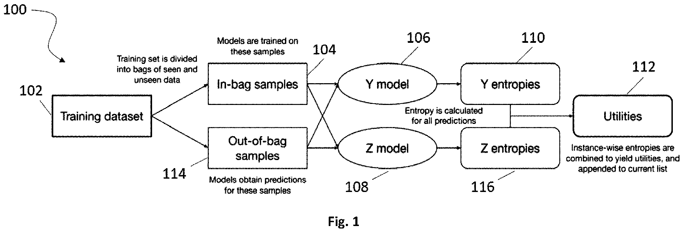

Referring now to the drawings, **Figure** 1 shows a flowchart 100 representation of an implementation of the present disclosure for machine-learning fairness-aware data valuation processing for supervised learning. At step 102, a training dataset is divided into bags of seen and unseen data. In one iteration of the bagging-based algorithm for processing in-bag samples (104) comprises one model for Y (106), and one model for Z (108). In one iteration of the bagging-based algorithm for processing out-of-bag samples (114) comprises one model for Z (108), and one model for Y (106). A final utility vector is obtained by combining averaged Y entropies (110) and Z entropies (116), obtained over each iteration, for each observation, into utilities (112).

A total of 4 datasets were used in the following applications. A Base dataset called AOF, and three variants obtained from AOF (Variant I-III). AOF is a real-world large-scale bank account-opening fraud dataset. Fraud detection is an extremely pertinent field for fair ML, since holding a bank account is seen as a basic right in the European Union [11]. In this use case of fraud, fraudsters attempt to impersonate someone to open an account, and quickly exhaust its line of credit.

Each row in the dataset corresponds to an application for opening a bank account, submitted via the online portal of a large European bank. Data was collected over an 8-month period and contains over 500K rows. The first 6 months are used for training and the last 2 months are used for testing, mimicking the procedure of a real-world production environment. As a dynamic real-world environment, some distribution drift is expected across time, both from naturally-occurring changes in the behavior of legitimate customers, as well as shifts in the illicit behavior of fraudsters as they learn to better fool the production model. In terms of data biases, this Base dataset suffers from group size disparities, from prevalence disparities, and from distinct group-wise class-conditional distribution bias.

Finally, the three variants consist of the AOF dataset with synthetically injected data biases:

- Variant I - synthetic binary protected attribute (Z) generated with a coinflip; this dataset is unbiased.
- Variant II - synthetic binary protected attribute (Z), generated such that the data only has prevalence disparities (Z is correlated with Y only).
- Variant III - synthetic binary protected attribute (Z), and two synthetic features, $x_1$ and $x_2$, which are correlated with Z and Y, such that the data has group-wise conditional class distribution bias. Importantly, only these features and Y are related to Z; the rest of the data is not.

Fraud rate (positive label prevalence) is about 1% in both sets. This means that a naïve classifier that labels all observations as not fraud achieves a test set accuracy of almost (99%). Such large class imbalance entails certain additional challenges for learning [18], and calls for a specific evaluation method. In particular, bank account providers are not willing to go above a certain level of FPR, because each false positive may lead to customer attrition (unhappy clients who may wish to leave the bank). At an enterprise-wide level, this may represent losses that outweigh the gains of detecting fraud. The goal is then to maximize the detection of fraudulent applicants (high global true positive rate, TPR), while maintaining low customer attrition (low global false positive rate). As such, the model's TPR was evaluated at a fixed FPR, imposed as a business requirement in the present case-study; the FPR ceiling is set to 5%. A more typical metric such as accuracy would not be informative, since it is trivial to obtain 99% accuracy by classifying all observations as not fraud (recall that fraud rate is around 1%).

As for fairness, one must ensure that automated customer screening systems do not disproportionately affect certain protected subgroups of the population, directly or indirectly. Fairness with respect to the positive labels is measured as the ratio between groupwise false negative rates (FNR). Equalizing FNR is equivalent to the well-known equality of opportunity metric [17], which dictates equal true positive rates (TPR), *T PR* = 1 - *FNR*. In the presented setting, this ensures that equal proportions of fraud are being caught for each sub-group. On the other hand, fairness with respect to the label negatives is measured as the ratio between group-wise false positive rates (FPR). Within the presented case-study, equalizing FPR (also known as predictive equality [7]) ensures no sub-group is being disproportionately denied access to banking services (Though ommitted for conciseness and lack of practical motivation, the conclusions for demographic parity are roughly the same as for predictive equality across experiments.). Demographic parity [10] was also measured, which assess whetherthe model is flagging the same percentage of individuals in each group as fraudulent.

Data valuation techniques have previously been used for tasks such as active learning [14] and the detection of noisy/corrupted observations [13, 44].

Herein the proposed method and data valuation metric is used for exploratory data analysis and a fairness intervention. In the latter, the knowledge of the utility of specific observations was leveraged in terms of both performance and fairness in training, to achieve better fairness-accuracy trade-offs in testing on a typical fraud detection task. To this end, sampling or reweighting procedures were applied to the training set, based on the computed valuations.

In an embodiment, observations are sampled, prioritising the most valuable ones, or assign distinct weights to each observation during the training of ML models (i.e., assign larger weights to the most valuable observations). As shown previously, such preprocessing strategies lead to favourable fairness-accuracy trade-offs that are comparable to, or beat, popular methods from the literature, such as prevalence sampling and reweighing [22].

As for the experiment itself, the AOF dataset was used (used by Cruz et al. [8], Pombal et al. [35, 36]) with client age as the protected attribute. Both the target and the protected attribute are binary, but it is highlighted that the data valuation method can deal with categorical or continuous variables, as well as with more than one protected attribute. The idea is to perform a sort of utility-aware sampling, or reweighting of observations in the training set, such that fairness unaware models trained on it obtain better fairness-accuracy trade-offs on unseen data (test set). To this end, the preprocessing method consists of three steps: first, computing each training instance's value with respect to Y and Z. Second, computing utility of each instance, given a utility function and respective parameters. Third, sampling or reweighing the training set before training models. If sampling is done, the instances with lower utility are discarded first. In the case of reweighting, the instances with higher utility are assigned larger weights during training.

Three strategies were considered: utility-aware sampling (UAS), utility-aware prevalence sampling (UASP), and utility-aware reweighting (UAR). UAS consists of undersampling a fraction of the training set to prioritize higher utility instances (the chosen fraction is a hyperparameter of this strategy). UASP consists of undersampling the data, such that protected groups have the same prevalence (fraud rate); in the dataset, this means discarding label negatives of the group with the lowest fraud rate, starting with the instances with the least utility, until fraud rates are balanced. Finally, UAR implies assigning weights to each observation in the training set prior to training, where the weight corresponds to the instances utility - the full training set is used.

Several hyperparameter configurations of the above approaches were experimented (e.g., different valuation algorithms, utility functions, alpha parameters in the utility, training set fractions, etc...).

After each preprocessing intervention, the resulting dataset (and instance weights, if it is the case) is used to train 25 LighGBM models (with hyperparameters sampled from a grid), which are then used to make predictions on a test set (the same 25 models are used throughout). LightGBM was chosen for being a state-of-theart algorithm for tabular data, and for easily allowing weights to be assigned to instances during training. The performance of each model is assessed with TPR at a binarization threshold such that 5%FPR is achieved, and several fairness measurements are taken: predictive equality, demographic parity, and equality of opportunity (In the form of min/max ratios; e.g., for predictive

$$\frac{min(FPR_A, FPR_B)}{max(FPR_A, FPR_B)}$$

equality , such that the resulting figure lies between 0 and 1 (and since the focal point of this particular analysis is not which group is being discriminated, but rather the extent of the discrimination)). To highlight the models that achieve the best performance-fairness trade-offs, the Pareto frontier [33] of the landscape was also analysed. The outline the 80% rule [29] threshold as a guideline for how fair models should be.

The fairness-aware data valuation approaches were compared with the case with no intervention (the full training set), random prevalence sampling (RPS, same as UASP, but observations are randomly discarded, instead of using a utility-based order) and reweighing (RW) [22]. Going back to the predictive equality (ratio of group-wise FPR) formula analyzed by Chouldechova [6], for example, one can see that the RPR and RW methods are targeting solely the prevalence component of the equation, while the UASP tackles all terms, and UAS and UAR tackle the precision and TPR terms.

Having computed the valuations of each instance (using one of the proposed entropy algorithms), one can use them to perform some exploratory data analysis. Going back to the biased AOF dataset variants used by Pombal et al.

[35], data valuation is used to gain further insight on data bias. To this end, the entropy of both classifiers used is plotted (one to obtain $v_y$ and the other to obtain $v_z$) to understand how the two valuations relate under each bias condition, and gauge which instances contribute the most to bias.

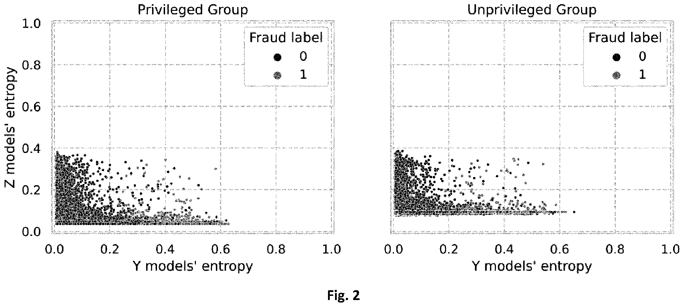

**Figure 2** shows a graphical representation of the entropy of classifiers Y and Z of a fairness-aware data valuation matrix split by protected group for a base dataset (which features group size disparity, prevalence disparity, and group-wise distinct class-conditional distribution biases). Each point is a training instance. There is a negative correlation between Z and Y entropies, with the latter having a tendency to be higher for lower values of Z. While observations do not pass 0.4 in Z entropy, unprivileged group seems to have "floor" on this metric (Z entropy is never lower than 0.1), indicating that models are not as sure when classifying the protected attribute in these cases (some observations of the privileged group show entropies lower than 0.05). Thus, there is room to prioritize certain observations that contribute towards the performance valuation and not to the bias valuation.

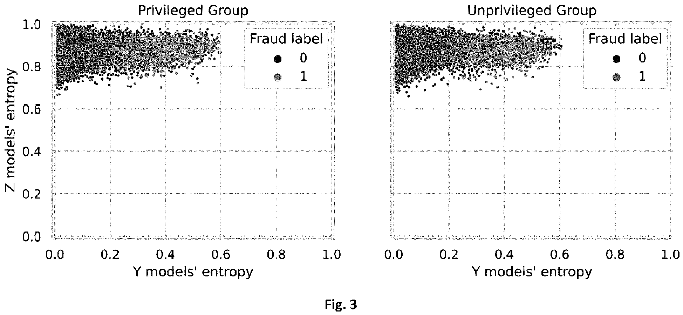

**Figure 3** shows a graphical representation of the entropy of classifiers Y and Z of a fairness-aware data valuation matrix split by protected group for the Variant I dataset (unbiased). Each point is a training instance. Z entropy is high for all values of Y entropy, indicating, correctly, that the data is not biased. The distribution of entropies is very similar across protected groups, which also makes sense given the unbiased nature of this dataset. There is no benefit in utility-aware sampling or reweighing in this case.

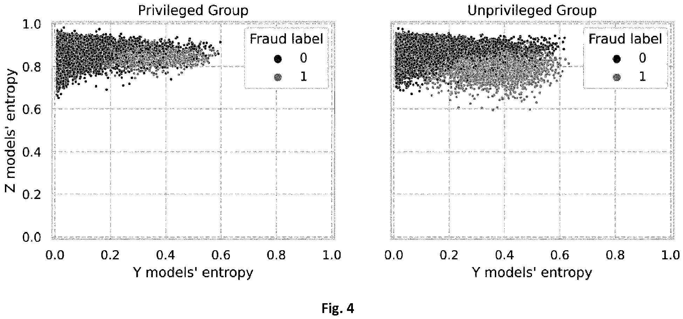

**Figure 4** shows a graphical representation of the entropy of classifiers Y and Z of a fairness-aware data valuation matrix split by protected group for the Variant II dataset (prevalence disparity bias). Each point is a training instance. Tough Z entropy is generally high for both groups, the unprivileged one (higher fraud rate) has more observations of higher Y entropy and lower Z entropy. This indicates that some performance gains can be achieved by leveraging the data's biases, which is true, but detrimental to fairness.

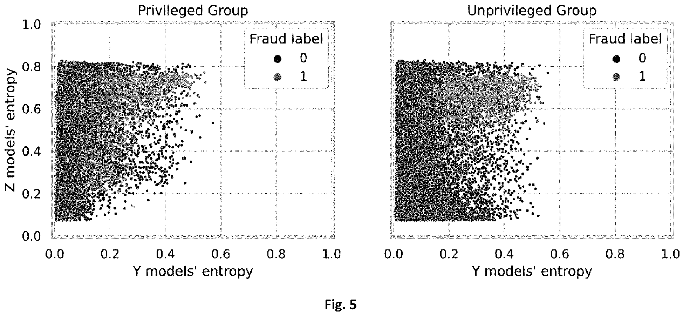

**Figure 5** shows a graphical representation of the entropy of classifiers Y and Z of a fairness-aware data valuation matrix split by protected group for the Variant III dataset (group-wise distinct class-conditional distribution bias). Each point is a training instance. It is clear that Z and Y valuations correlate for the privileged group (especially for fraudulent instances). This makes sense, since the data was engineered such that fraud became easier to detect on the observations of this group. There are valuable observations for Y that are not as valuable for Z (bias), meaning there can be gains from sampling and reweighing according to utility.

From the Figures 2 to 5, one can see that the landscape of valuations, like the one of fairness, changes with data bias. In particular, in the cases where datasets suffer from more "aggressive" biases (the Base dataset and Variant III), there are correlations between $v_y$ and $v_z$, which also change with the protected group under analysis. This means that there is more room to prioritize those instances that have large contributions to the predictive task (high $v_y$), but low contributions to data bias (low $v_z$). How this prioritization is made depends on the utility function employed.

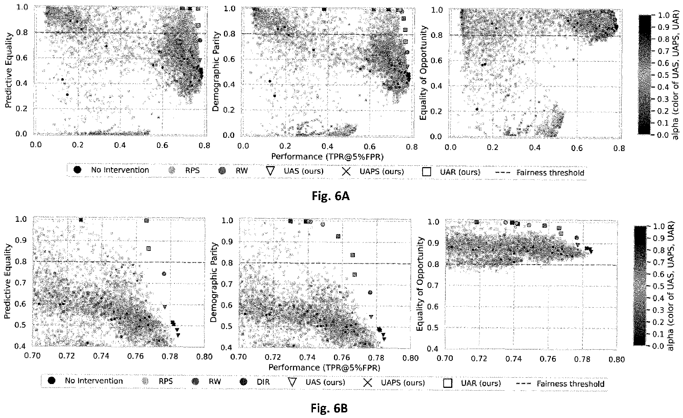

**Figures 6A and 6B** show two graphical representations of predictive equality, demographic parity, and equality of opportunity in relation to performance for no data intervention, random prevalence sampling (RPS), reweighting (RW), utility-aware sampling (UAS), utility-aware prevalence sampling (UASP), and utility-aware reweighting (UAR). Figure 6B shows a zoomed version in the area of the best performance-fairness trade-offs.

Each point corresponds to one of 25 LightGBM models trained on the corresponding pre-processed training set (see legend); the same 25 models were trained for many configurations of the methods (for example, UAS has more than 10 configurations, yielding more than 250 points). The axes represent performance and fairness on the test set in the task of predicting fraud (Y). Points that lie on the Pareto frontier of the two dimensions are represented by the larger, more opaque markers. A given point lies on the Pareto frontier if there is no other point that, at that level of performance/fairness, achieves better fairness/performance.

The $\alpha$ bar represents the weight attributed to performance ($\alpha$) and fairness (1 - $\alpha$) in the utility function of the methods. The sampling and reweighing techniques lie systematically on the Pareto frontier, with many non-Pareto points achieving favourable trade-offs too - beating, sometimes in performance and fairness, the models trained on the dataset without intervention.

Figures 6A and 6B summarize the performance-fairness trade-off landscape achieved by the models in the test set, trained on data that underwent the pre-processing techniques mentioned previously.

The relative abundance of points coloured between blue and red can be explained by the fact that for each of the proposed methods (UAS, UASP, and UAR) there are many more hyperparameters to choose from, and with which were experimented. First, as expected, there seems to be a clear relationship between alpha (the parameter that governs the weight placed on performance and data bias in the utility functions) and the fairness-accuracy landscape - the top performing models tend to be related to a higher $\alpha$, while the fairest models feature lower $\alpha$. Furthermore, the best trade-offs on the Pareto frontier (high performance and high fairness) seem to be achieved by midrange values ($\alpha$ around 0.5), which suggests that a balanced valuation of points allows models to be much fairer at little loss in performance. Notice, for example, on the leftmost plot of Figure 6B, the opaque squares with TPR around 0.77 and fairness above 0.85. It also seems that steep increases in fairness can be achieved with only slight drops in performance, for all fairness metrics.

Comparing the methods with those from the literature, these present the best trade-offs above the 0.8 fairness line for all three fairness metrics tested. Figure 6B, in particular, shows that even outside the Pareto frontier, the methods seem to occupy spaces of higher fairness, for a given level of performance, than RPS and RW - especially the reweighing approach (UAR). This meets the expectations, since the methods attempt to tackle all sources of data bias, instead of just prevalence disparity which is the case with RPS and RW (though the latter achieves this in an indirect way, without discarding examples). Comparing among the presented methods, reweighing approaches seem to obtain the best trade-offs. Not only do they feature several points on the Pareto frontier of all fairness metrics, but they also seem to perform better in general. This was in part to be expected, as these methods do not require examples to be discarded, thus, in principle, leave more information in the data for models to learn from. Even disregarding fairness, one can see that the presented approaches, for high values of $\alpha$, are useful to increase the performance of ML models. They can reach up to about 1 extra TPR point, when compared to the best performing models trained on the training set without intervention.

In an embodiment, the ideal configuration of hyperparameters are found by receiving signal from the performance and fairness obtained on a validation set, rather than brute-force experimentation.

In another embodiment, the value vector obtained as a product of the valuation procedure is used for exploratory data analysis in order to find examples that contribute to data bias, and to promote fairness in other applications like data collection and data generation.

The term "comprising" whenever used in this document is intended to indicate the presence of stated features, integers, steps, components, but not to preclude the presence or addition of one or more other features, integers, steps, components, or groups thereof. The disclosure should not be seen in any way restricted to the embodiments described and a person with ordinary skill in the art will foresee many possibilities to modifications thereof. The above-described embodiments are combinable. The following claims further set out particular embodiments of the disclosure.

References

[1] Julia Angwin, Jeff Larson, Lauren Kirchner, and Surya Mattu. 2016. Machine Bias: There's Software Used across the Country to Predict Future Criminals. And It's Biased against Blacks.

[2] Ricardo Barata, Miguel Leite, Ricardo Pacheco, Marco O. P. Sampaio, João Tiago Ascensão, and Pedro Bizarro. 2021. Active Learning for Imbalanced Data under Cold Start. In Proceedings of the Second ACM International Conference on AI in Finance (ICAIF '21). Association for Computing Machinery, New York, NY, USA, 1-9. https://doi.org/10.1145/3490354.3494423

[3] Simon Caton and Christian Haas. 2020. Fairness in Machine Learning: A Survey. arXiv:2010.04053 [cs, stat]

[4] Joymallya Chakraborty, Suvodeep Majumder, and Tim Menzies. 2021. Bias in Machine Learning Software: Why? How? What to Do?. In Proceedings of the 29th ACM Joint Meeting on European Software Engineering Conference and Symposium on the Foundations of Software Engineering (ESEC/FSE 2021). Association for Computing Machinery, New York, NY, USA, 429-440. https://doi.org/10.1145/ 3468264.3468537

[5] Irene Chen, Fredrik D Johansson, and David Sontag. 2018. Why Is My Classifier Discriminatory?. In Advances in Neural Information Processing Systems, Vol. 31. Curran Associates, Inc.

[6] Alexandra Chouldechova. 2017. Fair Prediction with Disparate Impact: A Study of Bias in Recidivism Prediction Instruments. Big Data 5, 2 (June 2017), 153-163. https://doi.org/10.1089/big.2016.0047

[7] Sam Corbett-Davies, Emma Pierson, Avi Feller, Sharad Goel, and Aziz Huq. 2017. Algorithmic Decision Making and the Cost of Fairness. In Proceedings of the 23rd ACM SIGKDD International Conference on Knowledge Discovery and Data Mining (KDD'17). Association for Computing Machinery, New York, NY, USA, 797-806. https://doi.org/10.1145/3097983.3098095

[8] André F. Cruz, Pedro Saleiro, Catarina Belém, Carlos Soares, and Pedro Bizarro. 2021. Promoting Fairness through Hyperparameter Optimization. In 2021 IEEE International Conference on Data Mining (ICDM). 1036-1041. https://doi.org/10. 1109/ICDM51629.2021.00119

[9] Wesley Hanwen Deng, Manish Nagireddy, Michelle Seng Ah Lee, Jatinder Singh, Zhiwei Steven Wu, Kenneth Holstein, and Haiyi Zhu. 2022. Exploring How Machine Learning Practitioners (Try To) Use Fairness Toolkits. In 2022 ACM Conference on Fairness, Accountability, and Transparency (FAccT '22). Association for Computing Machinery, New York, NY, USA, 473-484. https://doi.org/10. 1145/3531146.3533113

[10] Cynthia Dwork, Moritz Hardt, Toniann Pitassi, Omer Reingold, and Richard Zemel. 2012. Fairness through Awareness. In Proceedings of the 3rd Innovations in Theoretical Computer Science Conference (ITCS '12). Association for Computing Machinery, New York, NY, USA, 214-226. https://doi.org/10.1145/2090236. 2090255

[11] European Parliament and Council. 2014. Directive 2014/92/EU of the European Parliament and of the Council of 23 July 2014 on the Comparability of Fees Related to Payment Accounts, Payment Account Switching and Access to Payment Accounts with Basic Features. Official Journal of the European Union (OJ) 57 (2014), 214.

[12] Amirata Ghorbani, Michael Kim, and James Zou. 2020. A Distributional Framework For Data Valuation. In Proceedings of the 37th International Conference on Machine Learning. PMLR, 3535-3544.

[13] Amirata Ghorbani and James Zou. 2019. Data Shapley: Equitable Valuation of Data for Machine Learning. In Proceedings of the 36th International Conference on Machine Learning. PMLR, 2242-2251.

[14] Amirata Ghorbani, James Zou, and Andre Esteva. 2021. Data Shapley Valuation for Efficient Batch Active Learning. https://doi.org/10.48550/arXiv.2104.08312 arXiv:2104.08312 [cs, stat]

[15] Jerald Greenberg. 1987. A Taxonomy of Organizational Justice Theories. Academy of Management Review 12, 1 (Jan. 1987), 9-22. https://doi.org/10.5465/amr.1987. 4306437

[16] Gurobi Optimization, LLC. 2022. Gurobi Optimizer Reference Manual.

[17] Moritz Hardt, Eric Price, Eric Price, and Nati Srebro. 2016. Equality of Opportunity in Supervised Learning. In Advances in Neural Information Processing Systems, Vol. 29. Curran Associates, Inc.

[18] Haibo He and Edwardo A. Garcia. 2009. Learning from Imbalanced Data. IEEE Transactions on Knowledge and Data Engineering 21, 9 (Sept. 2009), 1263-1284. https://doi.org/10.1109/TKDE.2008.239

[19] Joel Hestness, Sharan Narang, Newsha Ardalani, Gregory Diamos, Heewoo Jun, Hassan Kianinejad, Md Mostofa Ali Patwary, Yang Yang, and Yanqi Zhou. 2017. Deep Learning Scaling Is Predictable, Empirically. https://doi.org/10.48550/ arXiv.1712.00409 arXiv:1712.00409 [cs, stat]

[20] Stephen C. Hora. 1996. Aleatory and Epistemic Uncertainty in Probability Elicitation with an Example from Hazardous Waste Management. Reliability Engineering & System Safety 54, 2 (Nov. 1996), 217-223. https://doi.org/10.1016/50951- 8320(96)00077-4

[21] Ayanna Howard and Jason Borenstein. 2018. The Ugly Truth about Ourselves and Our Robot Creations: The Problem of Bias and Social Inequity. Science and engineering ethics 24, 5 (2018), 1521-1536.

[22] Faisal Kamiran and Toon Calders. 2012. Data Preprocessing Techniques for Classification without Discrimination. Knowledge and Information Systems 33, 1 (Oct. 2012), 1-33. https://doi.org/10.1007/s10115-011-0463-8

[23] Bojan Karlaš, David Dao, Matteo Interlandi, Bo Li, Sebastian Schelter, Wentao Wu, and Ce Zhang. 2022. Data Debugging with Shapley Importance over Endto-End Machine Learning Pipelines. https://doi.org/10.48550/arXiv.2204.11131 arXiv:2204.11131 [cs]

[24] Yongchan Kwon and James Zou. 2022. Beta Shapley: A Unified and Noise-reduced Data Valuation Framework for Machine Learning. In Proceedings of The 25th International Conference on Artificial Intelligence and Statistics. PMLR, 8780-8802.

[25] DD Lewis and WA Gale. 1994. A Sequential Algorithmfor Training Text Classifiers. In Proc. ofSIGIR-94, 17th ACM International Conference on Research and Development in Information Retrieval. 3-12.

[26] Peizhao Li and Hongfu Liu. 2022. Achieving Fairness at No Utility Cost via Data Reweighing with Influence. In Proceedings of the 39th International Conference on Machine Learning. PMLR, 12917-12930.

[27] Joana Lorenz, Maria Inês Silva, David Aparício, João Tiago Ascensão, and Pedro Bizarro. 2020. Machine Learning Methods to Detect Money Laundering in the Bitcoin Blockchain in the Presence of Label Scarcity. In Proceedings of the First ACM International Conference on AI in Finance (ICAIF '20). Association for Computing Machinery, New York, NY, USA, 1-8. https://doi.org/10.1145/3383455.3422549

[28] Ninareh Mehrabi, Fred Morstatter, Nripsuta Saxena, Kristina Lerman, and Aram Galstyan. 2021. A Survey on Bias and Fairness in Machine Learning. Comput. Surveys 54, 6 (July 2021), 1-35. https://doi.org/10.1145/3457607

[29] Paul Meier, Jerome Sacks, and Sandy L. Zabell. 1984. What Happened in Hazelwood: Statistics, Employment Discrimination, and the 80% Rule. American Bar Foundation Research Journal 9, 1 (1984), 139-186.

[30] Maryam M. Najafabadi, Flavio Villanustre, Taghi M. Khoshgoftaar, Naeem Seliya, Randall Wald, and Edin Muharemagic. 2015. Deep Learning Applications and Challenges in Big Data Analytics. Journal of Big Data 2, 1 (Feb. 2015), 1. https://doi.org/10.1186/s40537-014-0007-7

[31] Jiquan Ngiam, Daiyi Peng, Vijay Vasudevan, Simon Kornblith, Quoc V. Le, and Ruoming Pang. 2018. Domain Adaptive Transfer Learning with Specialist Models. https://doi.org/10.48550/arXiv.1811.07056 arXiv:1811.07056 [cs]

[32] Cathy O'Neil. 2016. Weapons of Math Destruction: How Big Data Increases Inequality and Threatens Democracy. Crown.

[33] Vilfredo Pareto. 1919. Manuale Di Economia Politica: Con Una Introduzione Alla Scienza Sociale. Vol. 13. Società editrice libraria.

[34] Dana Pessach and Erez Shmueli. 2022. A Review on Fairness in Machine Learning. Comput. Surveys 55, 3 (Feb. 2022), 51:1-51:44. https://doi.org/10.1145/3494672

[35] José Pombal, André F. Cruz, João Bravo, Pedro Saleiro, Mário A. T. Figueiredo, and Pedro Bizarro. 2022. Understanding Unfairness in Fraud Detection through Model and Data Bias Interactions. In KDD 2022 Workshop on Machine Learning in Finance. https://doi.org/10.48550/arXiv.2207.06273 arXiv:2207.06273 [cs, q-fin]

[36] José Pombal, Pedro Saleiro, Mário A. T. Figueiredo, and Pedro Bizarro. 2022. Prisoners of Their Own Devices: How Models Induce Data Bias in Performative Prediction. In ICML 2022 Workshop on Responsible Decision Making in Dynamic Environments. https://doi.org/10.48550/arXiv.2206.13183 arXiv:2206.13183 [cs]

[37] Burr Settles. 2009. Active Learning Literature Survey. Technical Report. University of Wisconsin-Madison Department of Computer Sciences.

[38] Rachael Hwee Ling Sim, Xinyi Xu, and Bryan Kian Hsiang Low. 2022. Data Valuation in Machine Learning: "Ingredients", Strategies, and Open Challenges. In Thirty-First International Joint Conference on Artificial Intelligence,Vol. 6. 5607-5614. https://doi.org/10.24963/ijcai.2022/782

[39] Mariya Toneva, Alessandro Sordoni, Remi Tachet des Combes, Adam Trischler, Yoshua Bengio, and Geoffrey J. Gordon. 2019. An Empirical Study of Example Forgetting during Deep Neural Network Learning. In 7th International Conference on Learning Representations, {ICLR} 2019, New Orleans, LA, USA, May 6-9, 2019. OpenReview.net. https://doi.org/10.48550/arXiv.1812.05159 arXiv:1812.05159 [cs,stat]

[40] Sahil Verma, Michael Ernst, and Rene Just. 2021. Removing Biased Data to Improve Fairness and Accuracy. https://doi.org/10.48550/arXiv.2102.03054 arXiv:2102.03054 [cs]

[41] Jialu Wang, Yang Liu, and Caleb Levy. 2021. Fair Classification with GroupDependent Label Noise. In Proceedings of the 2021 ACM Conference on Fairness, Accountability, and Transparency (FAccT'21). Association for Computing Machinery, New York, NY, USA, 526-536. https://doi.org/10.1145/3442188.3445915

[42] Anran Xu, Zhenzhe Zheng, Fan Wu, and Guihai Chen. 2022. Online Data Valuation and Pricing for Machine Learning Tasks in Mobile Health. In IEEE INFOCOM 2022 - IEEE Conference on Computer Communications. 850-859. https://doi.org/10.1109/INFOCOM48880.2022.9796669

[43] Yazhou Yang and Marco Loog. 2018. A Benchmark and Comparison of Active Learning for Logistic Regression. Pattern Recognition 83 (Nov. 2018), 401-415. https://doi.org/10.1016/j.patcog.2018.06.004

[44] Jinsung Yoon, Sercan Arik, and Tomas Pfister. 2020. Data Valuation Using Reinforcement Learning. In Proceedings of the 37th International Conference on Machine Learning. PMLR, 10842-10851.

[45] Linchao Zhu, Sercan Ö. Arık, Yi Yang, and Tomas Pfister. 2020. Learning to Transfer Learn: Reinforcement Learning-Based Selection for Adaptive Transfer Learning. In Computer Vision - ECCV 2020 (Lecture Notes in Computer Science), Andrea Vedaldi, Horst Bischof, Thomas Brox, and Jan-Michael Frahm (Eds.). Springer International Publishing, Cham, 342-358. https://doi.org/10.1007/978-3-030-58583-9_21

**Claims**

1. Computer-implemented method for machine-learning fairness-aware data valuation processing for supervised learning, from a training dataset comprising a plurality of data records each containing data for a training instance (i) for the supervised learning, wherein the data for each training instance comprises one or more target variables (Y), one or more input variables (X) and one or more protected-attribute variables (Z), wherein fairness is defined as minimizing a data bias present in the training set in respect of the one or more protected variables (Z), the method comprising the steps of:

   for each target variable of the one or more target variables (Y), using the training dataset for training a machine-learning model with the one or more input variables (X) as model inputs and the each target variable (Y) as model output,
   for each protected-attribute variable of the one or more protected-attribute variables (Z), using the training dataset for training a machine-learning model with the one or more input variables (X) as model inputs and the each protected-attribute variable (Z) as model output;
   obtaining a prediction of each target variable (Y) and a prediction for each protected-attribute variable (Z), for each instance of the training dataset;
   obtaining a performance entropy from the predictions of each the target variable (Y) and a protected-attribute entropy from the predictions of each the protected-attribute variable (Z); and
   outputting the performance entropy and the protected-attribute entropy.

2. Method according to the previous claim further comprising the preparatory step of:

   splitting the training instances of the training dataset into a plurality of sets, each set comprising a first subset of training instances and second subset of training instances, such that each training instance is present in at least one of a second subset of the plurality of sets;
   the method further comprising, when training the machine-learning models and obtaining the prediction, the steps of:

      for each set, and for each target variable of the one or more target variables (Y), use the first subset of the each set for training a machine-learning model with the one or more input variables (X) as model inputs and the each target variable (Y) as model output;
      for each set, and for each protected-attribute variable of the one or more protected-attribute variables (Z), use the first subset of the each set for training a machine-learning model with the one or more input variables (X) as model inputs and the each protected-attribute variable (Z) as model output,
      the method further comprising, when obtaining a prediction, the step of: obtaining a prediction of each target variable (Y) and a prediction for each protected-attribute variable (Z), for each instance of the second subsets.

3. Method according to any of the previous claims comprising, using the one or more protected-attribute variables (Z) as model inputs when training the machine-learning model with the one or more input variables (X) as model inputs and the each target variable (Y) as model output.

4. Method according to any of the previous claims comprising, using the one or more target variables (Y) as model inputs when training the machine-learning model with the one or more input variables (X) as model inputs and the each protected-attribute variable (Z) as model output.

5. Method according to any of the claims 2-4, wherein the splitting is random and repeated until each training instance is present in at least one of second subsets, preferably wherein each training instance is randomly allocated to one of the second subsets.

6. Method according to any of the claims 2-5 wherein the splitting is overlapping between second subsets such each training instance is present in one or more second subsets of the plurality of sets.

7. Method according to any of the claims 2-6, comprising, after splitting and before training: sampling, for each set, without replacement within each set, with replacement across sets, training instances for subsequent training.

8. Method according to any of the previous claims further comprising a step of obtaining a central value statistic from the obtained entropy over the trained models and over the second subsets of the each set; and outputting the obtained central value statistic as an instance weighing for supervised training.

9. Method according to the previous claim wherein the obtaining of the central value statistic comprises obtaining an average of obtained entropy over the trained models and over the second subsets of the each set.

10. Method according to any of the previous claims further comprising a step of: obtaining a utility metric, for each training instance, as a combination of the obtained performance entropy or entropies and of the obtained protected-attribute entropy or entropies.

11. Method according to the previous claim wherein the utility metric, is a utility vector obtained, for each instance, via a linear scalarization defined as:

$$U_i = \alpha v_{y_i} + \sum_{j=1}^{k} \beta_j v_{z_{j_i}}$$

wherein $U_i$ is the utility metric for instance $i$, $\alpha$ and $\beta_j$ are weighing factors comprised between 0 and 1, $v_{yi}$ is a performance entropy in respect of target variable (Y) for instance $i$, $v_{z_{j_i}}$ is a protected-attribute entropy in respect of protected variable $z_j$ for instance i, wherein the one or more protected attribute variables (Z) comprise k protected attribute variables ($Z_{j=1\ldots k}$);
preferably wherein the one or more protected attribute variables (Z) comprise two protected attribute variables

($Z_a$, $Z_b$), and wherein the utility metric is defined as:
$$U_i = \alpha v_{y_i} + \beta v_{z_{a_i}} + \theta v_{z_{b_i}}$$
, and $v_{z_{a_i}}$

is a protected-attribute entropy in respect of a first protected variable $z_a$ for instance i, and $v_{z_{b_i}}$ is a protected-attribute entropy in respect of a second protected variable $z_b$ for instance i, $\theta$ is a weighing factor comprised between 0 and 1; more preferably $U_i = \alpha v_{yi} + (1 - \alpha)v_{zi}$, wherein $v_{zi}$ is a protected-attribute entropy in respect of protected variable (Z) for instance i.

12. Method according to claim 10 wherein the utility metric, is a utility vector obtained, for each instance, via a multiplicative scalarization defined as: $$U_i = v_{y_i}^{\alpha} \cdot v_{z_i}^{1-\alpha}$$ ; wherein $U_i$ is the utility metric for instance i, $\alpha$ is a weighing factor comprised between 0 and 1, $v_{yi}$ is a performance entropy in respect of target variable (Y) for instance i, and $v_{yi}$ is a protected-attribute entropy in respect of protected variable (Z) for instance i; wherein the one or more protected attribute variables (Z) comprise k subgroups of protected attribute variables ($Z_{j=1\ldots k}$).

13. Method according to any of the previous claims comprising carrying out supervised learning using the obtained utility metric or a utility metric obtained from a combination of the obtained performance entropy or entropies and of the obtained protected-attribute entropy or entropies, for each training instance, as instance weighing.

14. A computer program product embodied in a non-transitory computer-readable medium comprising computer program instructions, which when executed by a computer processor, cause the computer processor to carry out the method for machine-learning fairness-aware data valuation processing of any of the claims 1-13.

15. Non-transitory storage media including program instructions for machine-learning fairness-aware data valuation processing, the program instructions including instructions executable to carry out the method of any of the claims 1-13.

100

102

106 110 112

104

Models are trained on
these samples

Training set is divided
into bags of seen and
unseen data

In-bag samples

Training dataset

Y model

Y entropies

Utilities

Entropy is calculated
for all predictions

Out-of-bag
samples

Z model

Z entropies

Instance-wise entropies are
combined to yield utilities, and
appended to current list

114

Models obtain predictions
for these samples

108

116

**Fig. 1**

Fig. 2

**Privileged Group**

**Unprivileged Group**

Fig. 3

Fig. 4

Fig. 5

**Fig. 6A**

**Fig. 6B**

Europäisches
Patentamt

European
Patent Office

Office européen
des brevets

## EUROPEAN SEARCH REPORT

**Application Number**

EP 23 20 9550

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DU MENGNAN ET AL: "Fairness in Deep Learning: A Computational Perspective", IEEE INTELLIGENT SYSTEMS, IEEE, USA, vol. 36, no. 4, 10 June 2020 (2020-06-10), pages 25-34, XP011877693, ISSN: 1541-1672, DOI: 10.1109/MIS.2020.3000681 [retrieved on 2021-09-10] * page 1 - page 7 * | 1-15 | INV. G06N3/08 G06N20/00 |
| A | BRIAN HU ZHANG ET AL: "Mitigating Unwanted Biases with Adversarial Learning", ARXIV.ORG, CORNELL UNIVERSITY LIBRARY, 201 OLIN LIBRARY CORNELL UNIVERSITY ITHACA, NY 14853, 22 January 2018 (2018-01-22), XP080854064, * page 3 - page 4 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 5 April 2024 | Falco, Gabriele |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JULIA ANGWIN ; JEFF LARSON ; LAUREN KIRCHNER ; SURYA MATTU.** Machine Bias: There's Software Used across the Country to Predict Future Criminals. *And It's Biased against Blacks,* 2016
- Active Learning for Imbalanced Data under Cold Start. **RICARDO BARATA ; MIGUEL LEITE ; RICARDO PACHECO ; MARCO O. P. SAMPAIO ; JOÃO TIAGO ASCENSÃO ; PEDRO BIZARRO.** Proceedings of the Second ACM International Conference on AI in Finance (ICAIF '21). Association for Computing Machinery, 2021, 1-9
- **SIMON CATON ; CHRISTIAN HAAS.** Fairness in Machine Learning: A Survey. *arXiv:2010.04053 [cs, stat,* 2020
- Bias in Machine Learning Software: Why? How? What to Do?. **JOYMALLYA CHAKRABORTY ; SUVODEEP MAJUMDER ; TIM MENZIES.** Proceedings of the 29th ACM Joint Meeting on European Software Engineering Conference and Symposium on the Foundations of Software Engineering (ESEC/FSE 2021). Association for Computing Machinery, 2021, 429-440
- Why Is My Classifier Discriminatory?. **IRENE CHEN ; FREDRIK D JOHANSSON ; DAVID SONTAG.** Advances in Neural Information Processing Systems. Curran Associates, Inc, 2018, vol. 31
- **ALEXANDRA CHOULDECHOVA.** Fair Prediction with Disparate Impact: A Study of Bias in Recidivism Prediction Instruments. *Big Data,* June 2017, vol. 5 (2), 153-163, https://doi.org/10.1089/big.2016.0047
- Algorithmic Decision Making and the Cost of Fairness. **SAM CORBETT-DAVIES ; EMMA PIERSON ; AVI FELLER ; SHARAD GOEL ; AZIZ HUQ.** Proceedings of the 23rd ACM SIGKDD International Conference on Knowledge Discovery and Data Mining (KDD'17). Association for Computing Machinery, 2017, 797-806
- **ANDRÉ F. CRUZ ; PEDRO SALEIRO ; CATARINA BELÉM ; CARLOS SOARES ; PEDRO BIZARRO.** Promoting Fairness through Hyperparameter Optimization. *2021 IEEE International Conference on Data Mining (ICDM),* 2021, 1036-1041, https://doi.org/10.1109/ICDM51629.2021.00119

- Exploring How Machine Learning Practitioners (Try To) Use Fairness Toolkits. **WESLEY HANWEN DENG ; MANISH NAGIREDDY ; MICHELLE SENG AH LEE ; JATINDER SINGH ; ZHIWEI STEVEN WU ; KENNETH HOLSTEIN ; HAIYI ZHU.** 2022 ACM Conference on Fairness, Accountability, and Transparency (FAccT '22). Association for Computing Machinery, 2022, 473-484
- Fairness through Awareness. **CYNTHIA DWORK ; MORITZ HARDT ; TONIANN PITASSI ; OMER REINGOLD ; RICHARD ZEMEL.** Proceedings of the 3rd Innovations in Theoretical Computer Science Conference (ITCS '12). Association for Computing Machinery, 2012, 214-226
- Directive 2014/92/EU of the European Parliament and of the Council of 23 July 2014 on the Comparability of Fees Related to Payment Accounts, Payment Account Switching and Access to Payment Accounts with Basic Features. *Official Journal of the European Union (OJ),* 2014, vol. 57, 214
- **AMIRATA GHORBANI ; MICHAEL KIM ; JAMES ZOU.** A Distributional Framework For Data Valuation. *Proceedings of the 37th International Conference on Machine Learning. PMLR,* 2020, 3535-3544
- **AMIRATA GHORBANI ; JAMES ZOU.** Data Shapley: Equitable Valuation of Data for Machine Learning. *Proceedings of the 36th International Conference on Machine Learning. PMLR,* 2019, 2242-2251
- **AMIRATA GHORBANI ; JAMES ZOU ; ANDRE ESTEVA.** Data Shapley Valuation for Efficient Batch Active Learning. *arXiv:2104.08312 [cs, stat,* 2021, https://doi.org/10.48550/arXiv.2104.08312
- **JERALD GREENBERG.** A Taxonomy of Organizational Justice Theories. *Academy of Management Review,* January 1987, vol. 12 (1), 9-22, https://doi.org/10.5465/amr.1987. 4306437
- Gurobi Optimization. Gurobi Optimizer Reference Manual. 2022
- Equality of Opportunity in Supervised Learning. **MORITZ HARDT ; ERIC PRICE ; ERIC PRICE ; NATI SREBRO.** Advances in Neural Information Processing Systems. Curran Associates, Inc, 2016, vol. 29
- **HAIBO HE ; EDWARDO A. GARCIA.** Learning from Imbalanced Data. *IEEE Transactions on Knowledge and Data Engineering,* September 2009, vol. 21 (9), 1263-1284, https://doi.org/10.1109/TKDE.2008.239

- JOEL HESTNESS ; SHARAN NARANG ; NEWSHA ARDALANI ; GREGORY DIAMOS ; HEEWOO JUN ; HASSAN KIANINEJAD ; MD MOSTOFA ALI PATWARY ; YANG YANG ; YANQI ZHOU. Deep Learning Scaling Is Predictable, Empirically. *arXiv:1712.00409 [cs, stat,* 2017, https://doi.org/10.48550/ arXiv.1712.00409
- STEPHEN C. HORA. Aleatory and Epistemic Uncertainty in Probability Elicitation with an Example from Hazardous Waste Management. *Reliability Engineering & System Safety,* November 1996, vol. 54 (2), 217-223, https://doi.org/10.1016/50951-8320(96)00077-4
- AYANNA HOWARD ; JASON BORENSTEIN. The Ugly Truth about Ourselves and Our Robot Creations: The Problem of Bias and Social Inequity. *Science and engineering ethics,* 2018, vol. 24 (5), 1521-1536
- FAISAL KAMIRAN ; TOON CALDERS. Data Preprocessing Techniques for Classification without Discrimination. *Knowledge and Information Systems,* October 2012, vol. 33 (1), 1-33, https://doi.org/10.1007/s10115-011-0463-8
- BOJAN KARLAŠ ; DAVID DAO ; MATTEO INTERLANDI ; BO LI ; SEBASTIAN SCHELTER ; WENTAO WU ; CE ZHANG. Data Debugging with Shapley Importance over Endto-End Machine Learning Pipelines. *arXiv:2204.11131 [cs,* 2022, https://doi.org/10.48550/arXiv.2204.11131
- YONGCHAN KWON ; JAMES ZOU. Beta Shapley: A Unified and Noise-reduced Data Valuation Framework for Machine Learning. *Proceedings of The 25th International Conference on Artificial Intelligence and Statistics. PMLR,* 2022, 8780-8802
- DD LEWIS ; WA GALE. A Sequential Algorithmfor Training Text Classifiers. In Proc. ofSIGIR-94. *17th ACM International Conference on Research and Development in Information Retrieval,* 1994, 3-12
- PEIZHAO LI ; HONGFU LIU. Achieving Fairness at No Utility Cost via Data Reweighing with Influence. *Proceedings of the 39th International Conference on Machine Learning. PMLR,* 2022, 12917-12930
- Machine Learning Methods to Detect Money Laundering in the Bitcoin Blockchain in the Presence of Label Scarcity. **JOANA LORENZ ; MARIA INÊS SILVA ; DAVID APARÍCIO ; JOÃO TIAGO ASCENSÃO ; PEDRO BIZARRO.** Proceedings of the First ACM International Conference on AI in Finance (ICAIF '20). Association for Computing Machinery, 2020, 1-8
- NINAREH MEHRABI ; FRED MORSTATTER ; NRIPSUTA SAXENA ; KRISTINA LERMAN ; ARAM GALSTYAN. A Survey on Bias and Fairness in Machine Learning. Comput. *Surveys,* July 2021, vol. 54 (6), 1-35, https://doi.org/10.1145/3457607
- PAUL MEIER ; JEROME SACKS ; SANDY L. ZABELL. What Happened in Hazelwood: Statistics, Employment Discrimination, and the 80% Rule. *American Bar Foundation Research Journal,* 1984, vol. 9 (1), 139-186
- MARYAM M. NAJAFABADI ; FLAVIO VILLANUSTRE ; TAGHI M. KHOSHGOFTAAR ; NAEEM SELIYA ; RANDALL WALD ; EDIN MUHAREMAGIC. Deep Learning Applications and Challenges in Big Data Analytics. *Journal of Big Data,* February 2015, vol. 2 (1), 1, https://doi.org/10.1186/s40537-014-0007-7
- JIQUAN NGIAM ; DAIYI PENG ; VIJAY VASUDEVAN ; SIMON KORNBLITH ; QUOC V. LE ; RUOMING PANG. Domain Adaptive Transfer Learning with Specialist Models. *arXiv:1811.07056 [cs,* 2018, https://doi.org/10.48550/arXiv.1811.07056
- CATHY O'NEIL. Weapons of Math Destruction: How Big Data Increases Inequality and Threatens Democracy. *Crown,* 2016
- VILFREDO PARETO. Manuale Di Economia Politica: Con Una Introduzione Alla Scienza Sociale. Società editrice libraria, 1919, vol. 13
- DANA PESSACH ; EREZ SHMUELI. A Review on Fairness in Machine Learning. *Comput. Surveys,* February 2022, vol. 55 (3), 51-1, 51-44, https://doi.org/10.1145/3494672
- JOSÉ POMBAL ; ANDRÉ F. CRUZ ; JOÃO BRAVO ; PEDRO SALEIRO ; MÁRIO A. T. FIGUEIREDO ; PEDRO BIZARRO. Understanding Unfairness in Fraud Detection through Model and Data Bias Interactions. *KDD 2022 Workshop on Machine Learning in Finance,* 2022, https://doi.org/10.48550/arXiv.2207.06273
- JOSÉ POMBAL ; PEDRO SALEIRO ; MÁRIO A. T. FIGUEIREDO ; PEDRO BIZARRO. Prisoners of Their Own Devices: How Models Induce Data Bias in Performative Prediction. *ICML 2022 Workshop on Responsible Decision Making in Dynamic Environments,* 2022, https://doi.org/10.48550/arXiv.2206.13183
- Active Learning Literature Survey. **BURR SETTLES.** Technical Report. University of Wisconsin-Madison Department of Computer Sciences, 2009
- RACHAEL HWEE LING SIM ; XINYI XU ; BRYAN KIAN HSIANG LOW. Data Valuation in Machine Learning: "Ingredients", Strategies, and Open Challenges. *Thirty-First International Joint Conference on Artificial Intelligence,* 2022, vol. 6, 5607-5614, https://doi.org/10.24963/ijcai.2022/782

- **MARIYA TONEVA ; ALESSANDRO SORDONI ; REMI TACHET DES COMBES ; ADAM TRISCHLER ; YOSHUA BENGIO ; GEOFFREY J. GORDON.** An Empirical Study of Example Forgetting during Deep Neural Network Learning. *7th International Conference on Learning Representations, {ICLR} 2019, New Orleans, LA, USA,* 2019, https://doi.org/10.48550/arXiv.1812.05159
- **SAHIL VERMA ; MICHAEL ERNST ; RENE JUST.** Removing Biased Data to Improve Fairness and Accuracy. *arXiv:2102.03054 [cs,* 2021, https://doi.org/10.48550/arXiv.2102.03054
- Fair Classification with GroupDependent Label Noise. **JIALU WANG ; YANG LIU ; CALEB LEVY.** Proceedings of the 2021 ACM Conference on Fairness, Accountability, and Transparency (FAccT'21). Association for Computing Machinery, 2021, 526-536

- **ANRAN XU ; ZHENZHE ZHENG ; FAN WU ; GUIHAI CHEN.** Online Data Valuation and Pricing for Machine Learning Tasks in Mobile Health. *IEEE INFOCOM 2022 - IEEE Conference on Computer Communications,* 2022, 850-859, https://doi.org/10.1109/INFOCOM48880.2022.9796669
- **YAZHOU YANG ; MARCO LOOG.** A Benchmark and Comparison of Active Learning for Logistic Regression. *Pattern Recognition,* November 2018, vol. 83, 401-415, https://doi.org/10.1016/j.patcog.2018.06.004
- **JINSUNG YOON ; SERCAN ARIK ; TOMAS PFISTER.** Data Valuation Using Reinforcement Learning. *Proceedings of the 37th International Conference on Machine Learning. PMLR,* 2020, 10842-10851